(19) Europäisches Patentamt
European Patent Office
Office européen des brevets

(11) **EP 2 768 757 B1**

(12) **FASCICULE DE BREVET EUROPEEN**

(45) Date de publication et mention
de la délivrance du brevet:
**09.12.2015 Bulletin 2015/50**

(51) Int Cl.:
***B66C 23/00*** *(2006.01)*     ***B25J 9/10*** *(2006.01)*
***B25J 19/00*** *(2006.01)*

(21) Numéro de dépôt: **12772983.8**

(22) Date de dépôt: **18.10.2012**

(86) Numéro de dépôt international:
**PCT/EP2012/070678**

(87) Numéro de publication internationale:
**WO 2013/057203 (25.04.2013 Gazette 2013/17)**

(54) **MANIPULATEUR DE CHARGE A EQUILIBRAGE AMELIORE**

LASTMANIPULATOR MIT VERBESSERTEM AUSGLEICH

LOAD MANIPULATOR WITH IMPROVED BALANCING

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **18.10.2011 FR 1159394**

(43) Date de publication de la demande:
**27.08.2014 Bulletin 2014/35**

(73) Titulaire: **Commissariat à l'Énergie Atomique
et aux Énergies Alternatives
75015 Paris (FR)**

(72) Inventeur: **KFOURY, Fares
F-92140 Clamart (FR)**

(74) Mandataire: **Ahner, Philippe
BREVALEX
95, rue d'Amsterdam
75378 Paris Cedex 8 (FR)**

(56) Documents cités:
**FR-A1- 2 754 527    FR-A1- 2 781 709
GB-A- 1 029 890    JP-A- 7 267 600
JP-A- 51 122 254**

**EP 2 768 757 B1**

## Description

### DOMAINE TECHNIQUE ET ART ANTÉRIEUR

La présente invention se rapporte à un manipulateur pour déplacer une charge en état d'équilibre présentant un équilibrage amélioré.

Un manipulateur est un système articulé permettant de manipuler une charge dans un espace de travail défini. Le système est tel qu'il équilibre le poids de la charge, de façon à permettre une manipulation gestuelle libre suivant plusieurs degrés de liberté.

Dans la pratique, la masse du manipulateur est du même ordre de grandeur que sa capacité de charge. De ce fait, il est important de considérer aussi bien l'équilibrage de la structure que celui de la charge.

Il existe des manipulateurs basés sur le principe du parallélogramme déformable. Un tel manipulateur est par exemple décrit dans le document FR 2 754 527. Celui-ci comporte un bras de flèche et un bras de renvoi montés parallèles entre eux et articulés à leurs extrémités par un balancier et par un contre-balancier et formant un parallélogramme déformable, le balancier présentant à son extrémité libre, un point d'application d'une force due à la charge. L'un des bras du parallélogramme est articulé sur un axe de pivotement sensiblement horizontal porté par un châssis. En outre, il comporte un compensateur pour appliquer un effort compensateur pour une valeur donnée de la charge. Ce compensateur agit en un point tel qu'il se trouve toujours aligné avec l'axe de pivotement et le point d'application de la force due à la charge. Ce compensateur comporte un contrepoids adapté pour équilibrer l'appareil à vide et par exemple un moyen de traction pour générer un effort compensateur lorsque la charge est non nulle.

Or, les calculs montrent que la valeur du contrepoids et sa position sur le contre-balancier sont calculés de façon unique en fonction de la géométrie et des poids des pièces constituant le mécanisme. La réalisation d'un tel manipulateur peut être complexe, notamment à cause des contraintes d'encombrement. En effet, une fois la géométrie du manipulateur définie, qui est par exemple imposée par la fonction et l'espace de travail auxquels il doit répondre, la position du contrepoids est imposée, et peut par exemple se situer à plusieurs mètres de l'axe de rotation, sans qu'on puisse la modifier. Le contrepoids rendrait alors le manipulateur très encombrant et gênerait sa manipulation.

Afin de tenir compte des incertitudes de réalisation dans l'équilibrage, il serait préférable de pouvoir régler la position du contrepoids et sa valeur, cependant ce dernier réglage serait complexe à effectuer.

### EXPOSÉ DE L'INVENTION

C'est par conséquent un but de la présente invention d'offrir un manipulateur de conception simple et de prix de revient réduit offrant une compensation parfaite du poids du manipulateur et de la charge manipulée en tout point de l'espace de travail.

Le but de la présente invention est atteint par un manipulateur du type à parallélogramme déformable comportant un bras de flèche et un bras de renvoi montés parallèles entre eux et articulés à leurs extrémités par un balancier et par un contre-balancier et formant un parallélogramme déformable, le parallélogramme étant articulé sur un châssis autour d'un axe sensiblement horizontal, des moyens d'application d'un effort compensateur de la charge, et des moyens de compensation du poids de la structure du manipulateur à vide. Les moyens de compensation comportent au moins deux contrepoids, un premier contrepoids dont le poids s'applique en un point d'application aligné avec le point d'application de la force due à la charge et le point défini par l'intersection de l'axe horizontal et le plan contenant le parallélogramme déformable, quelle que soit la position de la charge, et un deuxième contrepoids dont le poids s'applique sur le bras de flèche ou le bras de renvoi. Les moyens d'application d'un effort compensateur de la charge à compenser appliquent leur effort au point d'application de compensation.

Grâce à l'invention, en mettant en oeuvre plusieurs contrepoids, on confère un degré de liberté dans le calcul de la valeur et de la position de ces contrepoids. Ce degré de liberté permet de disposer les contrepoids de façon à encombrer le moins possible le fonctionnement du mécanisme. Le manipulateur présente en outre une séparation des fonctions d'équilibrage de la structure et de la charge.

Dans la présente demande, on entend par " moyens formant contrepoids " des moyens aptes à exercer un effort pour équilibrer le manipulateur à vide. Il peut alors s'agir d'éléments dont l'effort est généré par leur poids. Il peut également s'agir de ressorts fixés sur le bras de renvoi et le bras de flèche de sorte à exercer un effort apte à équilibrer le manipulateur à vide.

Dans un mode de réalisation particulièrement avantageux, le manipulateur comporte deux contrepoids supplémentaires disposés, pour l'un sur le contre-balancier et, pour l'autre sur le bras de renvoi, ces contrepoids ayant une position réglable.

Ces contrepoids permettent de réaliser un équilibrage précis du manipulateur à vide, ce qui permet la mise en place d'une compensation proportionnelle du poids de la charge, i.e. la fonction reliant la force exercée par la charge et l'effort compensateur est une fonction linéaire. En outre, ils permettent de s'affranchir de l'incertitude sur la réalisation du système.

De plus, le réglage des positions des contrepoids se fait séquentiellement et non de façon couplée. Ceci permet une procédure d'équilibrage simple et précise.

La présente invention a alors pour objet un manipulateur de charge comportant un bras de flèche et un bras de renvoi montés parallèles entre eux et articulés à leurs extrémités par un balancier et par un contre-balancier de sorte à former un parallélogramme déformable, un axe de rotation sensiblement horizontal sur lequel est articulé le bras de flèche ou le bras de renvoi, l'axe de rotation étant porté par un châssis, l'axe de rotation étant sécant avec le bras de flèche ou le bras de renvoi et des moyens d'équilibrage appliquant entre autres un effort pour compenser une valeur donnée de la force due à la charge, en un point d'application, dit point d'application de compensation, ledit point d'application de compensation étant un point du contre-balancier et/ou du bras non articulé autour de l'axe de rotation tel qu'il est toujours aligné avec un point du balancier d'application de la force due à la charge et un point de l'axe de rotation situé dans le plan du parallélogramme déformable, dans lequel les moyens d'équilibrage comportent un premier contrepoids et un deuxième contrepoids adaptés pour équilibrer le manipulateur à vide et des moyens pour compenser la valeur de la force de la charge, le poids du premier contrepoids et l'effort compensateur de la valeur de la force de la charge s'exerçant sur le point d'application de compensation et le poids du deuxième contrepoids s'exerçant sur le bras articulé autour de l'axe de rotation.

Dans un exemple particulièrement avantageux, le manipulateur comporte un troisième contrepoids et un quatrième contrepoids, le troisième contrepoids étant porté par le bras de renvoi non articulé autour de l'axe de rotation et le quatrième contrepoids étant porté par le contre-balancier, la valeur du troisième contrepoids et la valeur et la position du quatrième contrepoids étant choisies de sorte que la valeur de l'effort d'équilibrage appliquée au point d'application de compensation est une fonction linéaire de la force appliquée par la charge sur le balancier et la position du troisième contrepoids étant choisie de sorte à compenser l'effet du quatrième contrepoids sur l'équilibrage du manipulateur.

De manière avantageuse, le troisième contrepoids a une position réglable le long du bras de renvoi qui le porte et le quatrième contrepoids a également une position réglable le long du contre-balancier. Dans ce cas, les contrepoids sont calculés de façon peu précise (la valeur du deuxième contrepoids peut être un multiple entier d'une masse donnée, dans le cas d'empilement de plaques identiques par exemple), et le réglage des positions du troisième et du quatrième contrepoids permet de palier cette imprécision, ainsi que les imprécisions de fabrication.

Dans un autre mode de réalisation, les contrepoids sont remplacés par des systèmes à ressorts.

Par exemple, le point d'application de compensation est situé au point d'articulation du bras non articulé autour de l'axe de rotation et du contre-balancier et dans lequel le deuxième contrepoids est relié à une extrémité libre du bras articulé autour de l'axe de rotation opposée à celle articulée sur le balancier.

Les moyens pour compenser la valeur de la force de la charge sont par exemple formés par des moyens de traction. Ces moyens de traction peuvent être formés par un vérin muni d'une tige qui applique une force au point d'application. Le premier contrepoids est alors avantageusement monté autour de la tige du vérin.

De manière avantageuse, le châssis est mobile en rotation autour d'un axe sensiblement vertical et/ou le long d'au moins un axe horizontal. Un organe moteur peut être prévu pour déplacer le châssis en rotation autour d'un axe sensiblement vertical et/ou le long d'au moins un axe horizontal.

**BRÈVE DESCRIPTION DES DESSINS**

La présente invention sera mieux comprise à l'aide de la description qui va suivre et des dessins en annexes sur lesquels :

- la figure 1 est une vue de côté d'un exemple de réalisation d'un manipulateur selon la présente invention ;
- la figure 2 est un schéma du manipulateur de la figure 1, sur lequel les forces exercées sur les différents éléments du manipulateur sont représentées ;
- la figure 3 est une vue de côté d'un autre exemple de réalisation d'un manipulateur selon la présente invention ;
- la figure 4 est un schéma partiel du manipulateur de la figure 3, sur lequel les forces exercées sur les différents éléments du manipulateur sont représentées;
- les figures 5 et 6 sont des vues de côtés d'un autre exemple de réalisation d'un manipulateur selon l'invention dans lequel l'un des contrepoids est formé par un ressort.

**EXPOSÉ DÉTAILLÉ DE MODES DE RÉALISATION PARTICULIERS**

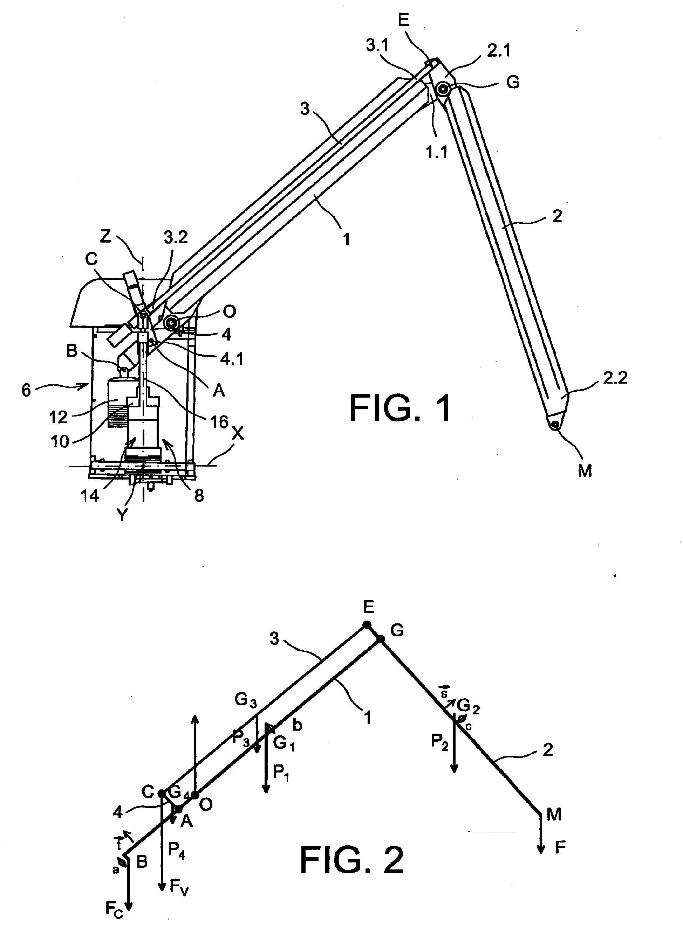

Sur les figures 1 et 2, on peut voir un exemple de réalisation d'un manipulateur selon l'invention.

Le manipulateur comporte un bras de flèche 1 et un bras de renvoi 3 montés parallèles entre eux et articulés à leurs extrémités par un balancier 2 et par un contre-balancier 4 et formant un parallélogramme déformable. Le parallélogramme est contenu dans un plan destiné à être sensiblement vertical.

Une première extrémité 2.1 du balancier 2 est articulée en un point E sur une première extrémité 3.1 du bras de renvoi 3. Une deuxième extrémité 2.2 du balancier 2 forme un point d'application M de la force exercée par la charge à manipuler.

Une première extrémité 1.1 du bras de flèche 1 est articulée sur le balancier 2 en un point G situé entre le point E et le point M. Le bras de flèche 3 est monté articulé sur un châssis 6 autour d'un axe sensiblement horizontal. L'intersection de l'axe horizontal et du plan du parallélogramme est désigné par O. Dans la suite, l'axe de rotation sensiblement horizontal sera également désigné O.

Le contre-balancier 4 est articulé par une première extrémité 4.1 sur le bras de flèche 1 entre le point O et une deuxième extrémité longitudinale du bras de flèche 1 en un point A, et est articulé sur le bras de renvoi 3 au niveau de la deuxième extrémité longitudinale 3.2 du bras de renvoi 3 en un point C.

La deuxième extrémité du bras de flèche 1 est désignée par la lettre B.

Le manipulateur comporte également des moyens 8 pour assurer l'équilibrage à la fois à vide, i.e. lorsqu'aucune charge n'est suspendue en M, et en présence d'une charge.

Les moyens d'équilibrage 8 comportent un premier contrepoids 10 articulé sur le contre-balancier et sur le bras de renvoi au point C, et un deuxième contrepoids 12 articulé sur le bras de flèche 1. Dans l'exemple représenté, le deuxième contrepoids 12 est articulé au point B.

Dans l'exemple représenté, les contrepoids sont formés par des éléments présentant une masse assurant l'équilibrage.

En outre, les moyens d'équilibrage 8 comportent des moyens développant un effort compensateur adapté à la charge. Il peut s'agir par exemple de moyens de traction. Dans l'exemple représenté sur la figure 1, il s'agit d'un vérin 14 dont la tige 16 est articulée sur le contre-balancier 4 et sur le bras de flèche 1 au point C. De manière avantageuse, le premier contrepoids 10 est monté autour de la tige 16 du vérin, ce qui simplifie la réalisation du manipulateur, supprimant une articulation spécifique du premier contrepoids au point C. Le vérin 14 compense l'effet de la charge sur l'équilibre du manipulateur.

Un manipulateur dans lequel le premier contrepoids 10 serait relié au point C de manière séparée par rapport au vérin ne sort pas du cadre de la présente invention. Le vérin peut être par exemple de type hydraulique ou électrique, les moyens développant un effort compensateur peuvent aussi être formés par un ou des ressorts.

Le point d'application de compensation C pourrait se situer soit sur le bras non articulé sur l'axe de rotation, soit sur le contre-balancier, et non au niveau de l'articulation sans sortir du cadre de la présente invention.

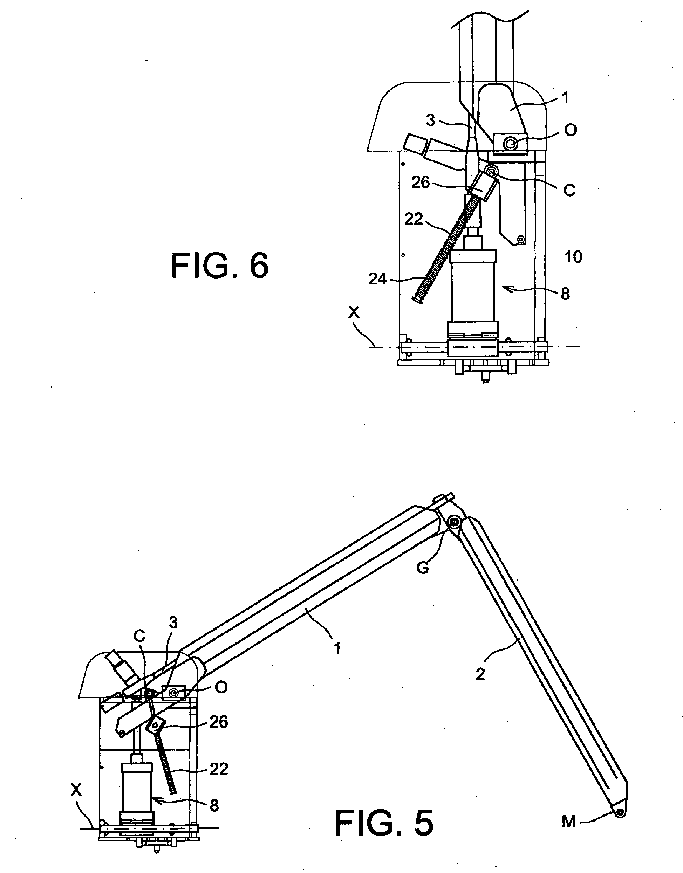

Dans un autre exemple de réalisation, les contrepoids pourraient être formés en tout ou en partie par des systèmes à ressort permettant de remplir les mêmes fonctions d'équilibrage. Sur les figures 5 et 6, on peut voir un exemple de réalisation d'un manipulateur selon l'invention dans lequel le deuxième contrepoids 12 est formé par un ressort 22 qui applique un effort sur le bras de flèche 1. Le ressort 22 est monté autour d'une tige 24 articulée sur le bras de flèche 1. Le ressort est en appui entre une extrémité de la tige 24 et une pièce (non visible) formant butée, articulée en rotation sur le châssis du manipulateur. La tige 24 traverse la pièce format butée, cette dernière suit alors le déplacement de la tige 24. De manière avantageuse, la position de l'axe de rotation de la pièce formant butée est réglable, ce qui permet d'assurer un réglage permettant de pallier l'incertitude sur la raideur du ressort. Dans l'exemple représenté, la pièce formant butée est articulée en rotation sur des éléments 28 montés sur le châssis, et dont la position peut être réglée pour modifier la position de l'axe de rotation de la pièce formant butée.

Le premier contrepoids 10 est formé par une masse dont le poids s'applique sur le bras de renvoi 3. En variante on pourrait prévoir d'avoir également le premier contrepoids formé par un ressort, ou que le premier contrepoids soit formé par un ressort et le deuxième contrepoids soit formé par une masse.

Dans l'exemple représenté sur la figure 1, le châssis est monté apte à pivoter sur le sol autour d'un axe vertical Z et apte à coulisser le long de deux axes horizontaux X et Y perpendiculaires entre eux. Le parallélogramme se déforme alors dans un plan apte à pivoter autour de l'axe Z. Ces articulations autour de l'axe Z et le long des axes horizontaux X et Y n'interviennent pas dans l'équilibrage du manipulateur.

Avantageusement, un organe moteur permet le déplacement en rotation et/ou en translation du châssis.

Dans l'exemple représenté, le châssis 6 repose sur le sol, le parallélogramme déformable étant disposé au-dessus du châssis. Un manipulateur dont le châssis serait par exemple suspendu à un plafond, le parallélogramme déformable étant situé en dessous du châssis ne sort pas du cadre de la présente invention.

Sur la figure 2, les centres de gravité de chacun des éléments 1, 2, 3, 4 du manipulateur sont désignés par $G_1$, $G_2$, $G_3$, $G_4$ respectivement.

On désigne par $\vec{F}$ la force appliquée par la charge au point M, $\vec{F_V}$ la force exercée par les moyens d'équilibrage de charge au point C, et $\vec{F_C}$ la force exercée par le deuxième contrepoids au point B.

Le poids de chacun des éléments 1, 2, 3, 4 est désigné par les vecteurs $\vec{P_1}$, $\vec{P_2}$, $\overline{yP_3}$, $\overline{yP_4}$ respectivement.

Dans l'exemple représenté, le point B n'est pas sur l'axe du bras de flèche ainsi que les points $G_1$ et $G_2$ et sont respectivement distants de cet axe de la distance a, b, c.

Les vecteurs $\vec{t}$ et $\vec{s}$ désignent des vecteurs de module 1 normaux au bras de flèche 1 et au balancier 2 respectivement.

$\overrightarrow{R_B}$ désigne la réaction du châssis au niveau de l'axe horizontal au point O.

Lorsque l'on écrit les équations d'équilibre des forces et des moments pour chacun des éléments 1, 2, 3, 4, on obtient les équations suivantes :

$$\begin{cases} \overrightarrow{R_b} + \overrightarrow{F_c} + \overrightarrow{P_1} + \overrightarrow{F_{21}} + \overrightarrow{F_{41}} = \vec{0} \\ \overrightarrow{OB} \wedge \overrightarrow{F_c} + \overrightarrow{OG_1} \wedge \overrightarrow{P_1} + \overrightarrow{OG} \wedge \overrightarrow{F_{21}} + \overrightarrow{OA} \wedge \overrightarrow{F_{41}} = \vec{0} \end{cases}$$

$$\begin{cases} \overrightarrow{P_2} + \overrightarrow{F_{32}} - \overrightarrow{F_{21}} + \vec{F} = \vec{0} \quad (\overrightarrow{F_{12}} = -\overrightarrow{F_{21}}) \\ \overrightarrow{GG_2} \wedge \overrightarrow{P_2} + \overrightarrow{GE} \wedge \overrightarrow{F_{32}} + \overrightarrow{GM} \wedge \vec{F} = \vec{0} \end{cases}$$

$$\begin{cases} \overrightarrow{P_3} + \overrightarrow{F_{43}} - \overrightarrow{F_{32}} + \overrightarrow{F_v} = \vec{0} \quad (\overrightarrow{F_{23}} = -\overrightarrow{F_{32}}) \\ \overrightarrow{EG_3} \wedge \overrightarrow{P_3} + \overrightarrow{EC} \wedge (\overrightarrow{F_v} + \overrightarrow{F_{43}}) = \vec{0} \end{cases}$$

$$\begin{cases} \overrightarrow{P_4} - \overrightarrow{F_{43}} - \overrightarrow{F_{41}} = \vec{0} \\ \overrightarrow{AG_4} \wedge \overrightarrow{P_4} - \overrightarrow{AC} \wedge \overrightarrow{F_{43}} = \vec{0} \end{cases}$$

L'équilibre des moments s'appliquant au bras de flèche s'écrit avec les points avec B' et $G_1$', qui sont respectivement les projections de B et G1 sur (OG) :

$$\overrightarrow{OG} \wedge \left\{ -\frac{OB'}{OG}.\overrightarrow{F_c} + \frac{OG_1'}{OG}.\overrightarrow{P_1} + \overrightarrow{P_2} + \frac{EC-EG_B}{EC}.\overrightarrow{P_3} + \overrightarrow{F} - \frac{OA}{OG}.\left( \overrightarrow{P_4} - \frac{EC-EG_B}{EC}.\overrightarrow{P_3} + \overrightarrow{F_v} + \overrightarrow{P_3} \right) \right\} + \vec{t} \wedge \left( -a.\overrightarrow{F_c} + b.\overrightarrow{P_1} \right) = \vec{0} \tag{I}$$

Cette équation doit être vérifiée en toute position (quels que soient $\overrightarrow{OG}$ et t) on obtient :

$$\overrightarrow{F_c} + \frac{OA}{OB'}.\overrightarrow{F_v} = \frac{OG_1'}{OB'}.\overrightarrow{P_1} + \frac{OG}{OB'}.\overrightarrow{P_2} + \frac{OG-EG_3}{OB'}.\overrightarrow{P_3} - \frac{OA}{OB'}.\overrightarrow{P_4} + \frac{OG}{OB'}.\overrightarrow{F} \tag{II}$$

$$a.\overrightarrow{F_c} = b.\overrightarrow{P_1} \tag{III}$$

L'équilibre des moments s'appliquant au balancier s'écrit :

$$\overrightarrow{GG_2} \wedge \overrightarrow{P_2} + \overrightarrow{GE} \wedge \overrightarrow{F_{32}} + \overrightarrow{GM} \wedge \vec{F} = \vec{0} \tag{IV}$$

En outre,

$$\overrightarrow{GE} \wedge \overrightarrow{F_{32}} = \overrightarrow{AG_4} \wedge \overrightarrow{P_4} + \overrightarrow{GE} \wedge \left( \overrightarrow{F_v} + \overrightarrow{P_3} \right) = \frac{AG_4}{GE}.\overrightarrow{GE} \wedge \overrightarrow{P_4} + \overrightarrow{GE} \wedge \left( \overrightarrow{F_v} + \overrightarrow{P_3} \right) \tag{V}$$

Or,

$$\overrightarrow{GG_2} = -\frac{GG_2}{GE}.\overrightarrow{GE} + c\vec{s} \text{ (VI) et } \overrightarrow{GM} = -\frac{GM}{GE}.\overrightarrow{GE} \text{ (VII)}$$

On obtient donc à partir des équations (IV), (V), (VI) et (VII):

$$\overrightarrow{GE} \wedge \left\{ -\frac{GG_2}{GE}.\overrightarrow{P_2} + \frac{AG_4}{GE}.\overrightarrow{P_4} + \overrightarrow{F_v} + \overrightarrow{P_3} - \frac{GM}{GE}.\vec{F} \right\} + \vec{s} \wedge c.\overrightarrow{P_2} = \vec{0}$$

Cette équation doit être vérifiée en toute position, donc quelque soit la direction du vecteur $\overrightarrow{GE}$, ce qui implique que le vecteur entre accolades est nul.

Le terme $\vec{s} \wedge c.\overrightarrow{P_2}$ ne pourra pas être compensé. Néanmoins, si nous faisons l'hypothèse que $\frac{c}{GE} < 10^{-2}$, l'effet de ce déséquilibrage n'est pas visible, puisque le couple qui en résulte est masqué par les frottements de l'axe de rotation, préchargé par le poids des pièces articulés.

Par conséquent, $\overrightarrow{F_V}$ et $\overrightarrow{F_C}$ vérifient les équations :

$$\begin{cases} \overrightarrow{F_c} + \frac{OA}{OB'}.\overrightarrow{F_v} = \frac{OG_1'}{OB'}.\overrightarrow{P_1} + \frac{OG}{OB'}.\overrightarrow{P_2} + \frac{OG - EG_3}{OB'}.\overrightarrow{P_3} - \frac{OA}{OB'}.\overrightarrow{P_4} + \frac{OG}{OB'}.\vec{F} \; (VIII) \\ \overrightarrow{F_v} = \frac{GM}{GE}.\vec{F} + \underbrace{\frac{GG_2}{GE}.\overrightarrow{P_2} - \overrightarrow{P_3} - \frac{AG_4}{GE}.\overrightarrow{P_4}}_{CST} \; (IX) \end{cases}$$

A la condition que $\frac{OG}{OA} = \frac{GM}{GE}$, on obtient une solution unique $(\overrightarrow{F_V}, \overrightarrow{F_C})$ au système d'équations VIII-IX.

L'effort compensateur $F_v$ est fonction de la charge F et la valeur de la charge $F_c$ est une constante. Cette égalité de rapport traduit géométriquement l'alignement du point d'application de compensation, de l'axe de rotation et du point d'application de la charge.

Cette condition d'égalité de rapports de dimensions est peu contraignante pour la réalisation du système, en effet elle n'implique que le bras de flèche 1 et le balancier 2, et ne rend pas le manipulateur encombrant et/ou complexe à réaliser.

Si le point d'application de compensation C était situé sur le balancier ou sur le contre-balancier, et non au niveau de l'articulation, on obtiendrait des égalités du même genre sur les longueurs traduisant l'alignement du point d'application de compensation, de l'axe de rotation et du point d'application de la charge.

On obtient alors :

$$\begin{cases} \overrightarrow{F_c} = \frac{OG_1'}{OB'}.\overrightarrow{P_1} + \frac{OG}{OB'}.\frac{G_2M}{GM}.\overrightarrow{P_2} + \frac{EC - EG_3}{OB'}.\overrightarrow{P_3} + \frac{OA}{GE}.\frac{AG_4 - AC}{OB'}.\overrightarrow{P_4} \; (X) \\ \overrightarrow{F_v} = \frac{GM}{GE}.\vec{F} + \underbrace{\frac{GG_2}{GE}.\overrightarrow{P_2} - \overrightarrow{P_3} - \frac{AG_4}{GE}.\overrightarrow{P_4}}_{CST} \; (XI) \end{cases}$$

En outre, à partir de l'équation (III), on obtient :

$$a = b.\frac{P_1}{F_c}$$

Il est alors possible de déterminer la valeur de a par exemple en mesurant le paramètre b à partir de la réalisation CAO.

Si GG1 se situe sur le segment OG, i.e. b est nul, a est nul et le point B se trouve aligné avec les points A, O et G.

La valeur du premier contrepoids est donnée par le module du vecteur désigné CST (équation XI), et la valeur du deuxième contrepoids est donnée par le module de $\overrightarrow{F_c}$ (équation X). Grâce à l'invention l'équilibrage du manipulateur est rendu plus simple avec des conditions de réalisation du manipulateur relativement peu contraignantes. Il est alors aisé de réaliser un manipulateur équilibré en tenant compte des contraintes d'encombrement.

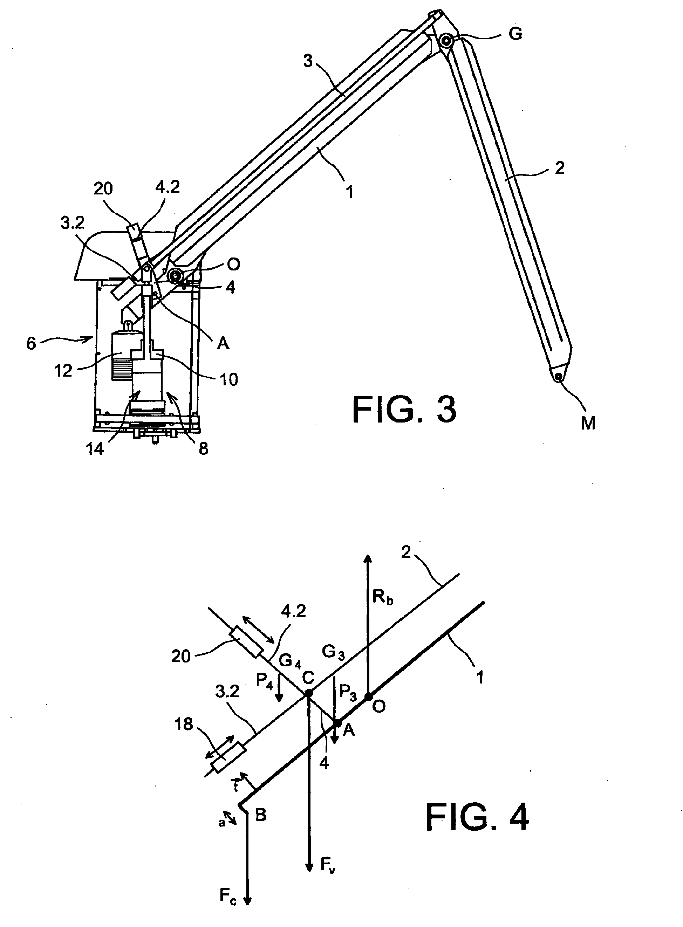

Sur les figures 3 et 4, on peut voir un autre exemple de réalisation d'un manipulateur selon la présente invention particulièrement avantageux.

Ce manipulateur comporte outre les premier 10 et deuxième 12 contrepoids, des troisième 18 et quatrième 20 contrepoids.

Le troisième contrepoids 18 est monté sur la deuxième extrémité 3.2 du bras de renvoi 3 et le quatrième contrepoids 20 est monté sur la deuxième extrémité 4.2 du contre-balancier 4. Chacun des troisième et quatrième contrepoids présente une position réglable le long de l'axe du bras de renvoi et du contre-balancier respectivement. Par exemple, le troisième et le quatrième contrepoids sont montés sur filetages le long du bras de renvoi 3 et du contre-balancier 4 respectivement, permettant un réglage en position facile. Tout autre moyen de réglage en position est envisageable, par exemple une crémaillère.

La valeur du troisième contrepoids 18 et la valeur et la position du quatrième contrepoids 20 sont choisies de sorte à annuler le terme CST dans l'équation XI. Ainsi, on obtient une fonction linéaire entre la valeur de $F_V$ et la valeur de F, et non plus une fonction affine. La valeur de $F_V$ est alors directement proportionnelle à F. Plusieurs familles de choix sont possibles pour ces trois paramètres, et ce degré de liberté permet de réduire l'encombrement des contrepoids.

Cependant l'ajout du troisième et du quatrième contrepoids a pour effet de modifier la valeur de $F_C$ et de fait celle du deuxième contrepoids 20. Or la valeur du deuxième contrepoids est déjà fixée. Il est alors possible de choisir la position du troisième contrepoids, on compense ainsi l'ajout du quatrième contrepoids dans l'équation X.

Nous allons maintenant expliquer un exemple de procédé de réglage en position des troisième et quatrième contrepoids.

Après assemblage des différentes pièces du manipulateur, le bras flèche 1 est fixé dans une position verticale, i.e. le segment [BG$_1$] est positionné à la verticale de l'axe de rotation. Le quatrième contrepoids 20 est ensuite déplacé le long de l'axe AC pour assurer un équilibrage du balancier 2.

Ensuite le bras de flèche 1 est relâché et le troisième contrepoids 18 est déplacé le long de la droite (EC). Ceci n'affecte pas le premier équilibrage effectué, puisque celui-ci dépend de la valeur de $\overrightarrow{P_3}$, mais ne dépend pas de la position de G$_3$.

Dans les exemples représentés, le premier contrepoids 10 applique son poids sur le bras de renvoi 3 et le deuxième contrepoids 12 applique son poids sur le bras de flèche 1. Cependant cette configuration n'est en aucun cas limitative. On pourrait prévoir la configuration inverse, le bras de renvoi 3 étant alors articulé autour du point O.

On a bien réalisé un manipulateur de charge offrant un équilibrage amélioré, tout en étant de réalisation simple.

## Revendications

1. Manipulateur de charge comportant :

   - un bras de flèche (1) et un bras de renvoi (3) montés parallèles entre eux et articulés à leurs extrémités par un balancier (2) et par un contre-balancier (4) de sorte à former un parallélogramme déformable,
   - un axe de rotation sensiblement horizontal sur lequel est articulé le bras de flèche ou le bras de renvoi, l'axe de rotation étant porté par un châssis (6), l'axe de rotation étant sécant avec le bras de flèche ou le bras de renvoi,
   - et des moyens d'équilibrage (8) appliquant entre autres un effort pour compenser une valeur donnée de la force due à la charge, en un point d'application (C), dit point d'application de compensation, ledit point d'application de compensation (C) étant un point du contre-balancier et/ou du bras non articulé autour de l'axe de rotation tel qu'il est toujours aligné avec un point (M) du balancier d'application de la force due à la charge et un point (0) de l'axe de rotation situé dans le plan du parallélogramme déformable,

   dans lequel les moyens d'équilibrage (8) comportent un premier contrepoids (10) et un deuxième contrepoids (12) adaptés pour équilibrer le manipulateur à vide et des moyens pour compenser la valeur de la force de la charge, le poids du premier contrepoids (10) et l'effort compensateur de la valeur de la force de la charge s'exerçant sur le point d'application de compensation (C) et le poids du deuxième contrepoids (12) s'exerçant sur le bras (1, 3) articulé autour de l'axe de rotation.

2. Manipulateur selon la revendication 1, comportant un troisième contrepoids (18) et un quatrième contrepoids (20), le troisième contrepoids (18) étant porté par le bras de renvoi (3) non articulé autour de l'axe de rotation et le quatrième contrepoids (20) étant porté par le contre-balancier (4), la valeur du troisième contrepoids (18) et la valeur et la position du quatrième contrepoids (20) étant choisies de sorte que la valeur de l'effort d'équilibrage appliqué au point d'application de compensation (C) est une fonction linéaire de la force appliquée par la charge sur le balancier (2) et la position du troisième contrepoids (18) étant choisie de sorte à compenser l'effet du quatrième contrepoids (20) sur l'équilibrage du manipulateur à vide.

3. Manipulateur selon la revendication 2, dans lequel le troisième contrepoids (18) a une position réglable le long du bras de renvoi (3) qui le porte et le quatrième contrepoids (20) a une position réglable le long du contre-balancier (4).

4. Manipulateur selon l'une des revendications 1 à 3, dans lequel tout ou partie des contrepoids est formé par des éléments présentant une masse assurant l'équilibrage.

5. Manipulateur selon l'une des revendications 1 à 3, dans lequel tout ou partie des contrepoids est formé par des systèmes à ressorts.

6. Manipulateur selon l'une des revendications 1 à 5, dans lequel le point d'application de compensation (C) est situé au point d'articulation du bras non articulé autour de l'axe de rotation (1,3) et du contre-balancier (4) et dans lequel le deuxième contrepoids (12) est relié à une extrémité libre du bras articulé autour de l'axe de rotation (3,1) opposée à celle articulée sur le balancier (2).

7. Manipulateur selon l'une des revendications 1 à 6, dans lequel les moyens de compensation comportent des moyens de traction (14) développant un effort compensateur adapté à la valeur de la charge.

8. Manipulateur selon la revendication 7, dans lequel les moyens de traction sont formés par un vérin (14) muni d'une tige (16) qui applique une force au point d'application de compensation (C).

9. Manipulateur selon la revendication 8, dans lequel le premier contrepoids (10) est monté autour de la tige (16) du vérin (14).

10. Manipulateur selon l'une des revendications 1 à 9, dans lequel le châssis (6) est mobile en rotation autour d'un axe (Z) sensiblement vertical et/ou le long d'au moins un axe horizontal (X, Y).

11. Manipulateur selon la revendication 10, comportant un organe moteur pour déplacer le châssis (6) en rotation autour de l'axe (Z) sensiblement vertical et/ou le long d'au moins un axe horizontal (X, Y).

**Patentansprüche**

1. Lastmanipulator, umfassend:

    - einen Auslegerarm (1) und einen Umlenkarm (3), die zueinander parallel montiert und an ihren Enden derart an einer Ausgleichsschwinge (2) und einer Gegen-Ausgleichsschwinge (4) angelenkt sind, dass ein verformbares Parallelogramm gebildet wird,
    - eine im Wesentlichen horizontale Drehachse, an der der Auslegerarm oder der Umlenkarm angelenkt ist, wobei die Drehachse durch ein Gestell (6) getragen ist, wobei die Drehachse den Auslegerarm oder den Umlenkarm schneidet,
    - und Ausgleichsmittel (8), die unter anderem eine Kraft zum Kompensieren eines gegebenen Werts der Kraft auf Grund der Last an einem Ausübungspunkt (C) ausüben, genannt Kompensationsausübungspunkt, wobei der Kompensationsausübungspunkt (C) ein Punkt der Gegen-Ausgleichsschwinge und/oder des nicht um die Drehachse angelenkten Arms derart ist, dass er stets ausgerichtet ist mit einem Punkt (M) der Ausgleichsschwinge zur Ausübung der Kraft auf Grund der Last und einem Punkt (O) der Drehachse, der in der Ebene des verformbaren Parallelogramms liegt, **dadurch gekennzeichnet, dass**

    die Ausgleichsmittel (8) ein erstes Gegengewicht (10) und ein zweites Gegengewicht (12) umfassen, die dazu ausgelegt sind, den leeren Manipulator auszugleichen, und Mittel zum Kompensieren des Werts der Kraft der Last, wobei das Gewicht des ersten Gegengewichts (10) und die Kraft zum Kompensieren des Werts der Kraft der Last auf den Kompensationsausübungspunkt (C) wirken und das Gewicht des zweiten Gegengewichts (12) auf den um die Drehachse angelenkten Arm (1, 3) wirkt.

**2.** Manipulator nach Anspruch 1, umfassend ein drittes Gegengewicht (18) und ein viertes Gegengewicht (20), wobei das dritte Gegengewicht (18) von dem Umlenkarm (3) getragen wird, der nicht um die Drehachse angelenkt ist, und das vierte Gegengewicht (20) durch die Gegen-Ausgleichsschwinge (4) getragen wird, wobei der Wert des dritten Gegengewichts (18) und der Wert und die Position des vierten Gegengewichts (20) derart gewählt sind, dass der Wert der Ausgleichskraft, die auf den Kompensationsausübungspunkt (C) ausgeübt wird, eine lineare Funktion der Kraft ist, die von der Last auf die Ausgleichsschwinge (2) ausgeübt wird, und wobei die Position des dritten Gegengewichts (18) derart gewählt ist, dass der Effekt des vierten Gegengewichts (20) auf den Ausgleich des leeren Manipulators kompensiert wird.

**3.** Manipulator nach Anspruch 2, bei dem das dritte Gegengewicht (18) eine Position hat, die entlang des Umlenkarms (3) regelbar ist, der es trägt, und das vierte Gegengewicht (20) eine Position hat, die entlang der Gegen-Ausgleichsschwinge (4) regelbar ist.

**4.** Manipulator nach einem der Ansprüche 1 bis 3, bei dem alle oder ein Teil der Gegengewichte durch Elemente gebildet sind, die eine Masse aufweisen, welche den Ausgleich gewährleistet.

**5.** Manipulator nach einem der Ansprüche 1 bis 3, bei dem alle oder ein Teil der Gegengewichte durch Federsysteme gebildet sind.

**6.** Manipulator nach einem der Ansprüche 1 bis 5, bei dem der Kompensationsausübungspunkt (C) am Anlenkungspunkt des nicht um die Drehachse (1, 3) angelenkten Arms und der Gegen-Ausgleichsschwinge (4) gelegen ist, und wobei das zweite Gegengewicht (12) mit einem freien Ende des um die Drehachse (3, 1) angelenkten Arms entgegengesetzt zu jenem verbunden ist, das an der Ausgleichsschwinge (2) angelenkt ist.

**7.** Manipulator nach einem der Ansprüche 1 bis 6, bei dem die Kompensationsmittel Traktionsmittel (14) umfassen, die eine an den Wert der Last angepasste Kompensationskraft entwickeln.

**8.** Manipulator nach Anspruch 7, bei dem die Traktionsmittel durch einen Zylinder (14) gebildet sind, der mit einer Stange (16) ausgestattet ist, die eine Kraft auf den Kompensationsausübungspunkt (C) ausübt.

**9.** Manipulator nach Anspruch 8, bei dem das erste Gegengewicht (10) um die Stange (16) des Zylinders (14) herum montiert ist.

**10.** Manipulator nach einem der Anspruch 1 bis 9, bei dem das Gestell (6) beweglich ist zur Drehung um eine im Wesentlichen vertikale Achse (Z) und/oder entlang wenigstens einer horizontalen Achse (X, Y).

**11.** Manipulator nach Anspruch 10, umfassend ein Motororgan zum Verlagern des Gestells (6) zur Drehung um die im Wesentlichen vertikale Achse (Z) und/oder entlang wenigstens einer horizontalen Achse (X, Y).

**Claims**

**1.** Load manipulator comprising:

- a boom arm (1) and a return arm (3) mounted parallel to each other and hinged at their ends by a loading bar (2) and by a counterbar (4) so as to form a deformable parallelogram,
- an approximately horizontal rotation axis on which the boom arm or the return arm is articulated, the rotation axis being supported by a frame (6), the rotation axis intersecting the boom arm or the return arm,
- and balancing means (8) applying forces including a force to compensate for a given value of the force due to the load, at an application point (C) called the compensation application point (C), said compensation application point (C) being a point on the counterbar and/or the non-articulated arm about the rotation axis such that it is always in line with a point (M) of the loading bar at which the force due to the load is applied and a point (O) on the rotation axis located in the plane of the deformable parallelogram,

**Characterized in that** the balancing means (8) comprise a first counterweight (10) and a second counterweight (12) designed to balance the manipulator at no load and means for compensating the value of the force due to the load, the weight of the first counterweight (10) and the force compensating the value of the force due to the load being applied on the compensation application point (C) and the weight of the second counterweight (12) being applied on the arm (1, 3) articulated about the rotation axis.

2. Manipulator according to claim 1, comprising a third counterweight (18) and a fourth counterweight (20), the third counterweight (18) being supported by the return arm (3) not articulated about the rotation axis and the fourth counterweight (20) being supported by the counterbar (4), the value of the third counterweight (18) and the value and the position of the fourth counterweight (20) being chosen such that the value of the balancing force applied at the compensation application point (C) is a linear function of the force applied by the load on the loading bar (2) and the position of the third counterweight (18) being chosen so as to compensate for the effect of the fourth counterweight (20) on balancing of the manipulator at no load.

3. Manipulator according to claim 2, in which the third counterweight (18) has an adjustable position along the return arm (3) that supports it and the fourth counterweight (20) has an adjustable position along the counterbar (4).

4. Manipulator according to one of claims 1 to 3, in which all or part of the counterweights are formed by elements with a mass providing balancing.

5. Manipulator according to one of claims 1 to 3, in which all or part of the counterweights are formed by spring systems.

6. Manipulator according to one of claims 1 to 5, in which the compensation application point (C) is located at the articulation point of the unarticulated arm about the rotation axis (1,3) and the counterbar (4) and in which the second counterweight (12) is connected to a free end of the articulated arm about the rotation axis (3,1) opposite the end articulated on the loading bar (2).

7. Manipulator according to one of claims 1 to 6, in which compensating means comprise traction means (14) developing a compensating force adapted to the value of the load.

8. Manipulator according to claim 7, in which traction means comprise a jack (14) with a rod (16) that applies a force at the compensation application point (C).

9. Manipulator according to claim 8, in which the first counterweight (10) is mounted around the rod (16) of the jack (14).

10. Manipulator according to one of claims 1 to 9, in which the frame (6) is free to rotate about an approximately vertical axis (Z) and/or along at least one horizontal axis (X, Y).

11. Manipulator according to claim 10, comprising a drive device to rotate the frame (6) about the approximately vertical axis (Z) and/or along at least one horizontal axis (X, Y).

## FIG. 1

## FIG. 2

FIG. 3

FIG. 4

FIG. 6

FIG. 5

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2754527